Europäisches Patentamt

European Patent Office

Office européen des brevets

(19)

(11) **EP 1 348 509 A2**

(12) **EUROPÄISCHE PATENTANMELDUNG**

(43) Veröffentlichungstag:
   **01.10.2003 Patentblatt 2003/40**

(51) Int Cl.⁷: **B23F 5/24**, B23F 9/10

(21) Anmeldenummer: **03006060.2**

(22) Anmeldetag: **19.03.2003**

(84) Benannte Vertragsstaaten:
   **AT BE BG CH CY CZ DE DK EE ES FI FR GB GR HU IE IT LI LU MC NL PT RO SE SI SK TR**
   Benannte Erstreckungsstaaten:
   **AL LT LV MK**

(30) Priorität: **27.03.2002 DE 10214040**

(71) Anmelder: **Hurth Modul GmbH**
   **09125 Chemnitz (DE)**

(72) Erfinder: **Engemann, Karl-Heinz**
   **01927 Chemnitz (DE)**

(74) Vertreter: **Horn, Klaus, Dr.**
   **Patentanwaltskanzlei Dr. Horn,**
   **Draisdorfer Strasse 69**
   **09114 Chemnitz (DE)**

(54) **Verfahren zur Herstellung geradverzahnter Kegelräder im kontinuierlichen Teilverfahren**

(57)   Die Erfindung betrifft das Herstellen geradverzahnter Kegelräder auf CNC-Kegelradfräsmaschinen, die bisher ausschließlich für das Herstellungsverfahren bogenverzahnter Kegelräder vorgesehen waren.

Der Erfindung die Aufgabe zugrunde, ein Verfahren bereitzustellen, welches es ermöglicht, auf den schon bisher zur Verfügung stehenden CNC-Kegelradfräsmaschinen im Einzelteil- oder im kontinuierlichen Teilverfahren geradverzahnte Kegelräder herzustellen.

Erfindungsgemäß wird diese Aufgabe dadurch gelöst, dass für das Schneiden von Kegelrädern mit verjüngter Zahnhöhe und einer Hypozykloide als Zahnlängslinie unterschiedliche Flugkreisradien einerseits für den Innenmesser (rwi) und andererseits für den Aussenmesser (rwa) vorgesehen werden, derart, dass in Fußebene Schrägungswinkel -dßm für die linken und Schrägungswinkel +dßm für die rechten Flanken einer Zahnlücke erzeugt werden, so dass weiter daraus sich in Teilebene der Verzahnung ein Schrägungswinkel ßm = 0° für beide Flanken ergibt und dass mit Messerköpfen gearbeitet wird, deren Folgewinkel (FoWi) zwischen Innen- und Aussenmessern einer Gruppe kleiner ist, als der halbe Messergruppenwinkel (GrWi) dass bei beiden Messerköpfen, die zum Fräsen eines geradverzahnten Kegelradpaares eingesetzt werden, pro Gruppe zuerst das Innen- und danach das Außenmesser schneidet.

Fig. 1

**EP 1 348 509 A2**

**Beschreibung**

Die Erfindung betrifft das technische Gebiet der Arbeitsverfahren, hierin das spanabhebende Herstellen von Verzahnungen durch Fräsen, insbesondere das Herstellen geradverzahnter Kegelräder auf CNC-Kegelradfräsmaschinen, die bisher ausschließlich für das Herstellungsverfahren bogenverzahnter Kegelräder vorgesehen waren.

Als spanabhebende Herstellungsverfahren für geradverzahnte Kegelräder sind nach dem Stand der Technik allgemein bekannt, siehe hierzu auch "Verzahntechnik I", Auszug aus dem Manuskript zur Vorlesung "Verzahnungstheorie, Herstellung von Verzahnungen", W. Höfler, Druckschrift der Universität Karlsruhe,

- das Hobeln mit zwei Stoßstählen,
- das Fräsen mit zwei kammartig ineinandergreifenden Messerköpfen sowie
- das Räumen mit auf dem Umfang einer Scheibe angeordneten Messersegmenten.

Beim Hobeln und Fräsen stellen die Werkzeugschneiden einen Zahn des imaginären Erzeugerrades dar. Neben der eigentlichen Schnittbewegung des Werkzeuges in Zahnlängsrichtung führen Werkzeug und Werkstück eine relative Wälzbewegung gegeneinander zur Ausbildung des Flankenprofils aus. Nach der Bearbeitung einer Lücke werden Werkzeug und Werkstück außer Eingriff gebracht und in die Ausgangsposition zurückgeführt. Das Werkstück wird um eine Zahnteilung verdreht und der Schneidzyklus einer Lücke beginnt erneut. Dieser Zyklus wiederholt sich, bis alle Lücken des Werkstücks verzahnt sind. Die Zähne werden hierbei im Einzelteilverfahren hergestellt.

Beim Räumen findet keine Wälzbewegung zur Ausbildung des Flankenprofils statt. Während einer Umdrehung der Werkzeugscheibe wird eine Lücke komplett verzahnt. Die Werkzeugscheibe besitzt einen messerfreien Sektor, in dem bei umlaufender Werkzeugscheibe das Werkstück eine Teilbewegung zur nächsten Lücke ausführt. Die Messer müssen in ihrer Profilform und Lage auf das zu bearbeitende Werkstück abgestimmt sein.

Desweiteren ist neben den v.g. spanabhebenden Verfahren allgemein bekannt, dass zur Herstellung geradverzahnter Kegelräder mit einem Modul m < 2,5 mm außerdem Formverfahren mit profilierten Scheibenfräsern im Einzelteilverfahren oder mit mehrgängigen Scheibenfräsern im kontinuierlichen Formverfahren eingesetzt werden. Nachteilig ist dafür, dass hierbei nur mit niedrigen Genauigkeitsansprüchen gearbeitet werden kann.

Für die genannten Verfahren sind gleichfalls die zugehörigen Maschinen und Werkzeuge allgemein bekannt.

Bekannt ist auch die Herstellung bogenverzahnter Kegelräder, a.a.O., S. 125 - Zykloidenverzahnung beispielsweise -, und dies mit einem mittleren Schrägungswinkel $\beta_m = 0°$ (Beta-Null-Kegelräder), die dann an Stelle der geradverzahnten Kegelräder eingesetzt werden, wenn der Einsatz bogenverzahnter Kegelräder erwünscht ist und in beiden Drehrichtungen das Ritzel nach außen gedrückt werden soll. So werden z.B. kreisbogenverzahnte Kegelräder im Einzelteilverfahren oder Kegelräder mit einer Epizykloide als Zahnlängslinie vorzugsweise beim kontinuierlichen Teilen auf CNC-Kegelradfräsmaschinen hergestellt. Für den Fall der Herstellung der Beta-Null-Kegelräder bestehen neben der Tatsache, dass Beta-Null-Kegelräder eben doch keine geradverzahnten Kegelräder sind, erhebliche Nachteile, insbesondere darin, dass

    1. bei kreisbogenverzahnten Beta-Null-Kegelrädern die Verzahnung zwar mit einem klassischen Zahnfußkegel ausgelegt werden kann, doch beide Flanken einer Lücke getrennt mit unterschiedlichen Maschineneinstellungen geschnitten werden müssen; wodurch ein Zweiflankenschnitt nur dann möglich ist, wenn ein relativ großer Fußwinkel verwendet wird und dennoch besitzen die Zähne eine deutlich sichtbare Längskrümmung, deren Radius mit dem Messerkopfradius identisch ist,

    2. bei Beta-Null-Kegelrädern mit einer Epizykloide als Zahnlängslinie, die vorzugsweise beim kontinuierlichen Teilen eingesetzt wird, der Krümmungsradius noch kleiner als der Flugkreisradius des verwendeten Messerkopfes ist, weiterhin besitzen die Zähne neben der starken Längskrümmung eine konstante Höhe und in Richtung der Zahnbreite ändert sich durch die konstante Zahnhöhe die Lückenweite im Fußkegel wesentlich stärker als im Teilkegel; für das Herstellen einer Lücke im Zweiflankenschnitt darf jedoch die innere Lückengrundbreite nicht kleiner sein als die halbe äußere Lückengrundbreite, wobei diese Forderung bei Beta-Null-Kegelrädern mit konstanter Zahnhöhe die maximal ausführbare Zahnbreite wesentlich auf etwa 60 bis 70 % des bei geradverzahnten Kegelrädern üblichen Wertes einschränkt.

Prinzipiell bekannt sind des Weiteren Zykloid-Verzahnungen a.a.O. S. 18 und in "Stanki dja obrabotki konitscheskich zubtschatych kolos", Izdanie 2-e, V. N. Kedrinskij, K. M. Pismanik, Izdatelstvo "Maschinostroenie" Moskva 1967, Seite 506 - 508. Nach v.g. N. Kedrinskij und K. M. Pismanik beschreibt bei einer Hypozykloide ein Punkt P mit einem Flugkreisradius rw eine Gerade, wenn ein Grundkreisradius RG = 2 • rw und ein Rollkreisradius RR = rw verwendet wird.

Demzufolge ist als nächstgelegener Stand der Technik zur nachbeschriebenen Erfindung die allgemein bekannte Verfahrensweise der Herstellung von bogenverzahnten Kegelrädern auf CNC-Kegelradfräsmaschinen und die v.g. Erkenntnis von N. Kedrinskij und K. M. Pismanik zu benennen.

Technische Lösungen, mit deren man gerad-verzahnte Kegelräder auf CNC-Kegelradfräsmaschi-nen im kontinuierlichen Teilverfahren fräsen kann, sind bisher noch nicht offenbart worden.

Von den Mängeln und ihren Ursachen beim oben dargestellten Stand der Technik ausgehend, liegt der Erfindung die Aufgabe zugrunde, ein Verfahren bereitzustellen, welches es ermöglicht, auf den schon bisher zur Verfügung stehenden CNC-Kegelradfräsmaschinen und unabhängig von der v.g. bisherigen Möglichkeit dieser Maschinen zum Fräsen von ausschließlich bogenverzahnter Kegelräder im Einzelteil- oder im kontinuierlichen Teilverfahren geradverzahnte Kegelräder herzustellen und damit die o.g. Nachteile zu überwinden.

Erfindungsgemäß wird diese Aufgabe durch die kennzeichnenden Teile des unabhängigen Anspruches 1 gelöst.

Vorteilhafte Wirkungen dieser vorgeschlagenen technischen Lösung ergeben sich insbesondere dadurch, dass die bisher ausschließlich für die Herstellung bogenverzahnter Kegelräder im kontinuierlichen Teilverfahren vorgesehenen CNC-Kegelradfräsmaschinen eine wesentliche Erweiterung ihres Anwendungs-bzw. Einsatzbereiches erfahren und damit der Bedarf einer speziellen Maschine zur Herstellung geradverzahnter Kegelräder entfällt. Es werden keine Änderung der Werkstückrohlingsabmessungen, wenn geradverzahnte Kegelräder nach dem erfindungsgemäßen Verfahren geschnitten werden sollen, notwendig. Es entfallen des Weiteren die unproduktiven Hilfszeiten, die beim Einzelteilen in jedem Zyklus durch das Abheben, Rückwälzen, Teilen und erneuten Einfahren auf Zahntiefe entstehen.

Nachfolgendes Ausführungsbeispiel soll die Erfindung näher erläutern.

Es zeigen:

Fig. 1: Die geometrischen Verfahrensparmeter beim Schnitt in der Fußebene eines Kegelrades,

Fig. 2: Die geometrischen Verfahrensparmeter mit Schneidwerkzeug und mit Kegelradausschnitt in den verschiedenen Ebenen, Schnitt C-C, (Fußebene), Schnitt D-D (Teilebene), Schnitt B-B (mittlere Normalebene), Schnitt A-A (Neigungsebene für Zahnlängsballigkeit),

Fig. 3: Die geometrischen Verfahrensparmeter beim Schnitt mit Schneidwerkzeug, Zahn-/Zahn-lückenabbildung und Hypozykloiden-Darstel-lung

Ausführungsbeispiel:

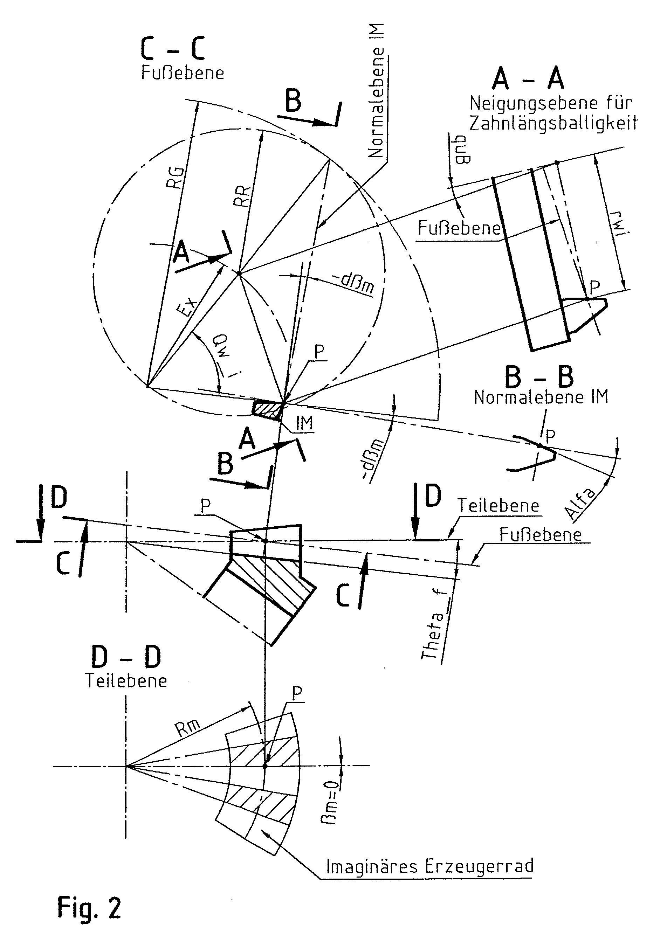

Die erfindungsgemäße Verfahrensweise stellt auf einer CNC-Kegelradfräsmaschine mit einem Mes-serkopf im kontinuierlichen Teilverfahren geradverzahn-te Kegelräder her, wobei die Zahnlängslinie eine Hypozykloide mit sehr geringer Krümmung in der mittleren Teilkegellänge Rm der Verzahnung ist. Durch unter-schiedliche Flugkreisradien $rwi = rw - \Delta r$ bei den Innen- und $rwa = rw + \Delta r$ bei den Außenmessern werden beim Fräsen in der mittleren Teilkegellänge Rm bei gleichen Grund- RG und Rollkreisradius RR durch die Innen- IM und Außenmesser AM die Schrägungswinkel $-d\beta m$ und $+d\beta m$ in der Fußebene an der linker und rechter Flanke einer Lücke erzeugt. Die Größe der in Fußebene zu rea-lisierenden Schrägungswinkel $-d\beta m$ und $+d\beta m$ ist von der Größe des Fußwinkels Theta_f und des Eingriffswinkels Alfa (Fig. 2) der Kegelradverzahnung abhängig, da

$$|d\beta m| = f\ (Theta\_f\ und\ Alfa\_n).$$

In der Praxis kann der Absolutwert des Win-kels $d\beta m$ bis zu 3 Grad betragen.

Bei der Realisierung der berechneten Schrä-gungswinkel $-d\beta m$ und $+d\beta m$ in der Fußebene entsteht in der Teilebene an beiden Flanken der bei geradverzahnten Kegelrädern erforderliche Schrägungswinkel $ßm = 0°$, Fig. 2.

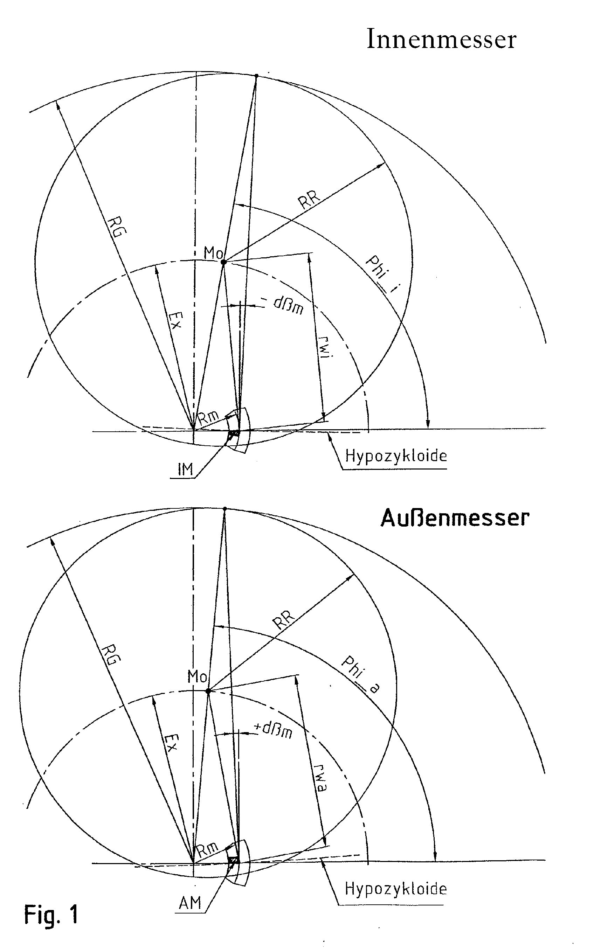

In Fig. 1 ist die Lage der geometrischen Parameter in der Fußebene dargestellt. Die Fußebene verläuft parallel zum Fußkegel des Werkstücks durch den Bezugspunkt P (Pa, Pi) der Verzahnung, Fig. 2 (3). Da beim Verzahnen der linken Flanke und der rechten Flanke einer Lücke mit den gleichen Fest- RG und Rollkreisen RR gearbeitet werden muss, werden zur Erzeugung der beiden Schrägungswinkel $-d\beta m$ und $+d\beta m$ unter-schiedliche Flugkreisradien rwi (Innenmesser) und rwa (Außenmesser) verwendet, siehe oben und Fig. 1. Die Lage der Messerkopfachse Mo beim Durchgang des Innenmessers IM durch die mittlere Teilkegellänge Rm ist durch die Polarkoordinaten Radius Ex und den Winkel Phi_i und beim Durchgang des Außenmessers AM durch die Polarkoordinaten Radius Ex und den Winkel Phi_a bestimmt, Fig.1.

Im Messerkopf sind die Innen- IM und Außenmesser AM gleichmäßig in Gruppen auf der Planseite angeordnet. Der Gruppenwinkel GrWi zwischen zwei aufeinanderfolgenden Innenmessern IM hängt von der gewählten Gruppenanzahl zw ab:

$$GrWi = 360°/zw$$

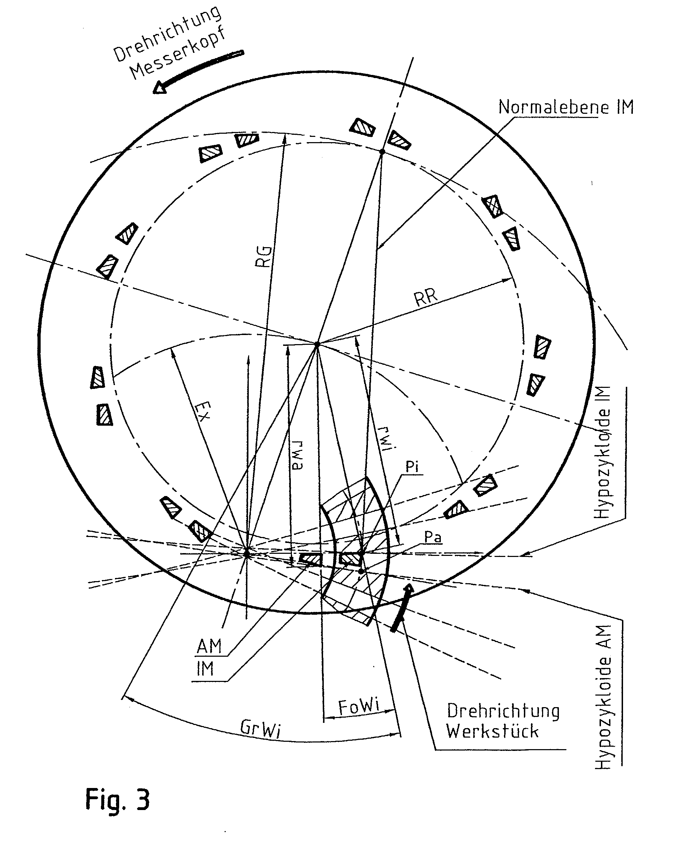

In Fig. 3 ist ein Messerkopf mit 9 Gruppen dargestellt. Bei einem Folgewinkel FoWi = GrWi/2 zwischen dem Innen- und Außenmesser einer Gruppe würde durch die unterschiedlichen Polarwinkel Phi_i (Innenmesser, Fig. 1) und Phi_a (Außenmesser, Fig. 1) bei einer gleichmäßigen Drehung von Messerkopf und

Werkstück am Werkstück eine Lückenweite zwischen Pi und Pa, Fig. 3, entstehen, die erheblich vom Sollwert abweicht. Deshalb erfolgt eine Anpassung des Folgewinkels zwischen Innen- und Außenmesser einer Gruppe mit dem Ziel, die vorgegebene Lückenweite zwischen Pi und Pa zu erreichen. Die Größe des Folgewinkels hängt im Wesentlichen von folgenden Ausgangsparametern ab:

$$FoWi = f\ (zw,\ RG,\ RR,\ Theta\_f,\ Alfa)$$

Mit der Schrägungswinkelkorrektur -dβm und +dβm (siehe oben) in der Fußebene vergrößert sich gegenüber einer Auslegung mit konstanter Zahnhöhe die Lückengrundbreite am inneren Zahnende und verkleinert sich am äußeren. Dadurch können mit dem vorgeschlagenen Verfahren Radbreiten im Zweiflankenschnitt verzahnt werden, die bei geradverzahnten Kegelrädern üblich sind.

In Fig. 2 ist schematisch das Erzeugen der Längsballigkeit erläutert. Durch Neigen der Messerkopfachse um den Winkel quB = 2 bis 7° relativ zur Fußebene wird erreicht, dass an den beiden Zahnenden die Lücke tiefer gefräst wird. Dieses Verfahren zum Erzeugen einer Längsballigkeit ist bekannt und wird in der Praxis beim Herstellen bogenverzahnter Kegelräder genutzt. Die Profilwinkel der Innen- und Außenmesser sind so zu gestalten, dass trotz der Messerkopfneigung der geforderte Eingriffswinkel Alfa in der Normalebene erzeugt wird. In dieser Fig. 2 ist ebenfalls der Verlauf der Zahnflanken in der Teilebene dargestellt. Die Tangenten zu den Zahnflanken im Punkt P müssen die Erzeugerradachse schneiden (Schrägungswinkel βm = 0°).

Wie beim Fräsen bogenverzahnter Kegelräder im kontinuierlichen Fräsverfahren werden beim vorgeschlagenen Verfahren zum Fräsen eines geradverzahnten Kegelradpaares ebenfalls zwei Messerköpfe unterschiedlicher Schnittrichtung eingesetzt. Der Einsatz der beiden Messerköpfe mit unterschiedlicher Schnittrichtung ist notwendig, da in der Praxis nur in Sonderfällen die Bedingungen RG = 2 • rw und RR = rw exakt eingehalten werden können. Der tatsächliche Krümmungsradius der gestreckten Hypozykloide liegt im Bereich zwischen 1000 bis 8000 mm. Dieser große Krümmungsradius ist bei den üblichen Zahnbreiten dann kaum zu erkennen.

**Patentansprüche**

1. Verfahren zur Herstellung geradverzahnter Kegelräder im kontinuierlichen Teilverfahren auf einer CNC-Kegelradfräsmaschine mit einem Planmesserkopf, **dadurch gekennzeichnet, dass** für das Schneiden von Kegelrädern mit verjüngter Zahnhöhe und einer Hypozykloide als Zahnlängslinie unterschiedliche Flugkreisradien einerseits für das Innenmesser (rwi) und andererseits für das Außenmesser (rwa) vorgesehen werden, derart, dass in Fußebene Schrägungswinkel (βm) mit -dβm für die linken und Schrägungswinkel (βm) mit +dβm für die rechten Flanken einer Zahnlücke erzeugt werden, so dass weiter daraus sich in Teilebene der Verzahnung ein Schrägungswinkel (βm) mit βm = 0° für beide Flanken ergibt, **dass** mit Messerköpfen gearbeitet wird, deren Folgewinkel (FoWi) zwischen dem Innen- und Außenmesser einer Gruppe kleiner ist, als der halbe Messergruppenwinkel (GrWi) und **dass** bei beiden Messerköpfen, die zum Fräsen eines geradverzahnten Kegelradpaares eingesetzt werden, pro Gruppe zuerst das Innen- und danach das Außenmesser schneidet.

Innenmesser

Außenmesser

Fig. 1

Fig. 2

Fig. 3